**Europäisches Patentamt**

**European Patent Office**

**Office européen des brevets**

(19)

(11) Veröffentlichungsnummer: **0 004 575**
**B1**

(12) **EUROPÄISCHE PATENTSCHRIFT**

(45) Veröffentlichungstag der Patentschrift:
**24.06.81**

(51) Int. Cl.³: **A 47 J 39/00, A 23 P 1/00**·

(21) Anmeldenummer: **79100733.9**

(22) Anmeldetag: **12.03.79**

(54) **Vorrichtung zum Auftauen von Tiefkühlkost.**

(30) Priorität: **25.03.78 DE 2813145**

(43) Veröffentlichungstag der Anmeldung:
**17.10.79 Patentblatt 79/21**

(45) Bekanntmachung des Hinweises auf die Patenterteilung:
**24.06.81 Patentblatt 81/25**

(84) Benannte Vertragsstaaten:
**BE CH FR GB IT LU NL SE**

(56) Entgegenhaltungen:
**DE-A-2 409 292**
**DE-A-2 412 835**
**DE-A-2 615 906**
**DE-A-2 623 946**
**FR-A-1 472 785**
**FR-A-2 218 064**
**FR-A-2 262 498**
**US-A-2 523 796**
**US-A-3 221 729**
**US-A-3 586 516**

(73) Patentinhaber: **Melitta-Werke Bentz & Sohn,**
**Ringstrasse 99, D-4950 Minden 1 (DE)**

(72) Erfinder: **Florjancic, Peter, St. Martinstrasse 16,**
**D-8100 Garmisch-Partenkirchen (DE)**

(74) Vertreter: **Loesenbeck, Otto, Dr. et al, Herforder**
**Strasse 17, D-4800 Bielefeld 1 (DE)**

Vorrichtung zum Auftauen von Tiefkühlkost

Die vorliegende Erfindung betrifft eine Vorrichtung zum Auftauen von Tiefkühlkost, bestehend aus einem ein Warmluftgebläse aufnehmenden Gehäuse mit einer darin angeordneten Heizung und einem Lüfterrad und aus einem das aufzutauende Gut aufnehmenden Behälter, der an dem Gehäuse lösbar befestigt ist, wobei das Warmluftgebläse auf der dem Behälter zugewandten Seite eine Einblasöffnung sowie eine Luftaustrittsöffnung aufweist.

Es ist bekannt, Backöfen oder Grillgeräte mit einem Heissluftgebläse auszustatten, so dass in derartigen Geräten bei entsprechend geringer Temperatureinstellung auch das Auftauen von Tiefkühlkost möglich ist.

Die Benutzung eines entsprechend ausgerüsteten Backofens zum Auftauen von Tiefkühlkost hat den Nachteil, dass sehr viel Energie nutzlos verbraucht wird, da oft nur kleine Portionen aufgetaut werden sollen und dazu in jedem Falle der gesamte Backraum auf entsprechende Temperatur aufgewärmt werden muss.

Die Verwendung eines entsprechend ausgerüsteten Grillgerätes zum Auftauen von Tiefkühlkost ist mit ähnlichen Nachteilen behaftet. Hinzu kommt, dass in vielen Küchen ein Backofen mit einer Grilleinrichtung vorhanden ist, so dass also die Anschaffung eines Grillgerätes nur zum Zwecke des Auftauens von Tiefkühlkost nicht in Frage kommt.

Aus der DE-A 24 09 292, aus der DE-A 25 55 522 sowie aus der DE-A 26 06 942 sind Vorrichtungen der gattungsgemässen Art bekannt. Bei all diesen vorbekannten Konstruktionen besteht der das aufzutauende Gut aufnehmende Behälter aus einem festen, starren Behälter, so dass der Raumbedarf auch im zerlegten Zustand immer noch verhältnismässig gross ist.

Der vorliegenden Erfindung liegt die Aufgabe zugrunde, eine Vorrichtung der gattungsgemässen Art zu schaffen, die ein schnelles und schonendes Auftauen von Tiefkühlkost ermöglicht und deren Raumbedarf, insbesondere bei Nichtgebrauch, sehr minimal ist.

Die Lösung dieser Aufgabe besteht nach der Erfindung darin, dass der Behälter aus einem Kunststoffbeutel besteht, dessen offene Kopf-Seite lösbar an dem das Warmluftgebläse aufnehmenden Gehäuse befestigt ist und dass die Einblasöffnung und die Luftaustrittsöffnung jeweils im Bereich einander gegenüberliegender Seitenwandungen des Kunststoffbeutels angeordnet sind.

Die erfindungsgemässe Vorrichtung weist gegenüber allen vorbekannten Vorrichtungen ähnlicher Art den Vorteil auf, dass der Platzbedarf bei Nichtgebrauch sehr klein ist, da der Kunststoffbeutel völlig zusammengefaltet werden kann und somit der Platzbedarf der Vorrichtung nur noch von der Grösse des Warmluftgebläses abhängt, welches verständlicherweise sehr klein gebaut sein kann. Durch die spezielle Anordnung der Einblasöffnung und der Luftaustrittsöffnung wird erreicht, dass die in den Kunststoffbeutel eingeblasene Warmluft das aufzutauende Gut von allen Seiten umstreicht, da die Warmluft an den Beutelwandungen um das aufzutauende Gut herumgeführt wird.

Ein weiterer Vorteil der erfindungsgemässen Vorrichtung liegt darin, dass das aufzutauende Gut während des Auftauprozesses dauernd beobachtet werden kann, da der Kunststoffbeutel selbstverständlich aus einer durchsichtigen Kunststoffolie herstellbar ist.

Ein weiterer, ganz beträchtlicher Vorteil liegt darin, dass eine Reinigung des Behälters im Falle seiner Verschmutzung überflüssig ist, da die Verwendung eines neuen, sauberen Kunststoffbeutels ohne weiteres möglich ist, da derartige Beutel sehr billig herstellbar sind.

Ausführungsbeispiele der Erfindung sind in den Zeichnungen dargestellt und werden im folgenden näher beschrieben.

Es zeigen:

Fig. 1 eine Seitenansicht einer erfindungsgemässen Vorrichtung in schematischer Darstellung,

Fig. 2 eine Teilansicht in Richtung des Pfeiles II in Fig. 1, wobei am Warmluftgebläse zusätzlich ein Auflagerost für das aufzutauende Gut angesetzt ist,

Fig. 3 eine der Fig. 2 entsprechende Darstellung nach einem weiteren Ausführungsbeispiel der Erfindung,

Fig. 4 einen Schnitt nach der Linie IV–IV in Fig. 3,

Fig. 5 die in Fig. 3 mit V bezeichnete Einzelheit in vergrösserter Darstellung.

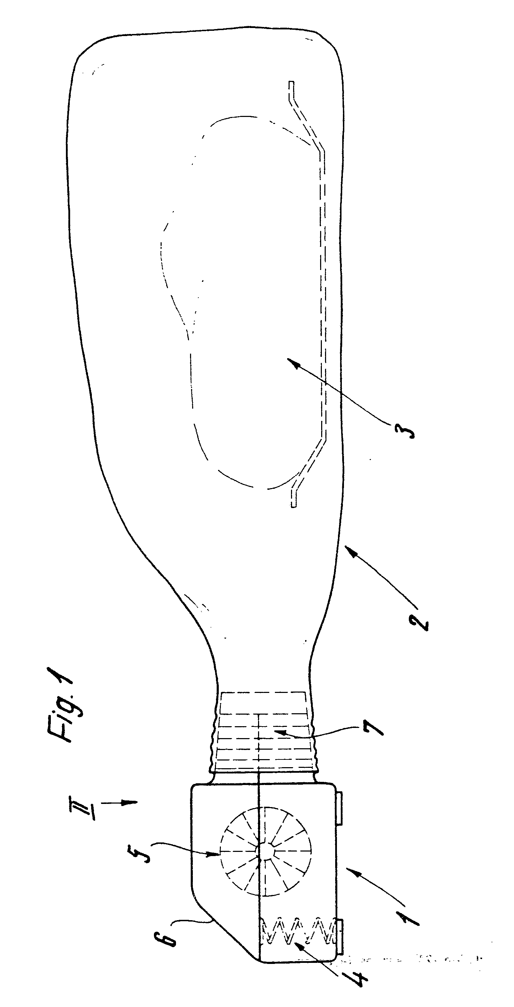

In Fig. 1 ist eine Vorrichtung zum Auftauen von Tiefkühlkost gezeigt, die im wesentlichen aus einem Warmluftgebläse 1 sowie aus einem Kunststoffbeutel 2 besteht, wobei der Kunststoffbeutel 2 das aufzutauende Gut 3 aufnimmt.

Das Warmluftgebläse 1 besteht aus einem mit einer Heizung 4 sowie einem Lüfterrad 5 ausgestatteten Gehäuse 6 und ist an der dem Kunststoffbeutel 2 zugewandten Seite mit einem Ansatz 7 versehen, auf den die offene Seite des Kunststoffbeutels 2 aufschiebbar und in noch zu beschreibender Weise festklemmbar ist.

Die Heizung 4 und das Lüfterrad 5 sind in Fig. 1 nur schematisch dargestellt, da es im Rahmen vorliegender Erfindung von untergeordneter Bedeutung ist, in welcher Weise die in den Kunststoffbeutel 2 hineingeblasene Warmluft erzeugt wird.

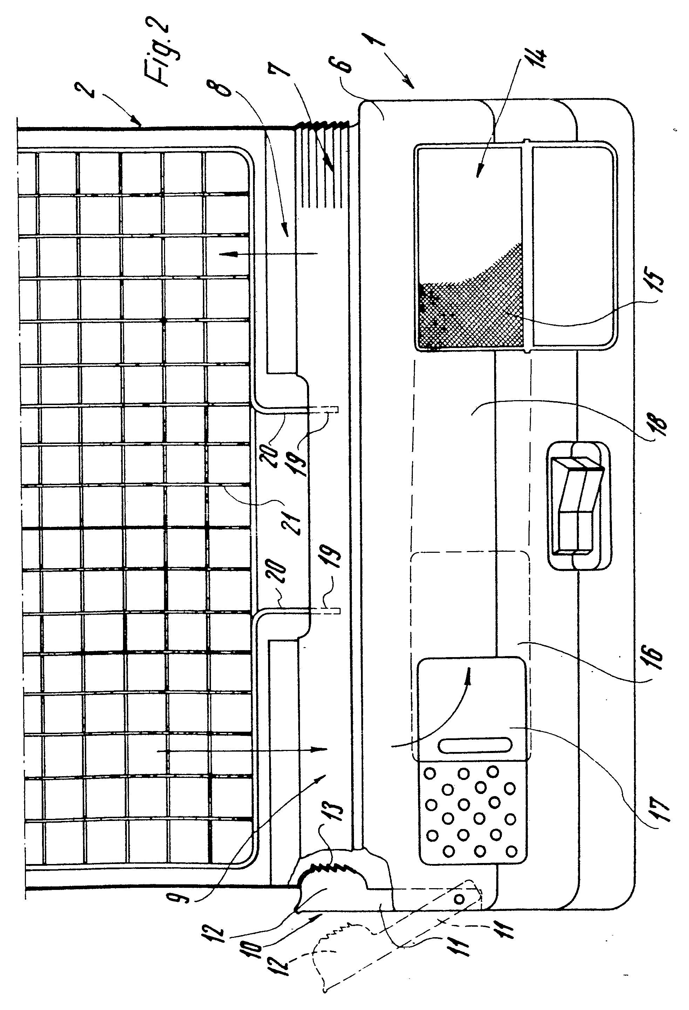

Wie aus Fig. 2 hervorgeht, ist das Warmluftgebläse 1 mit einer Einblasöffnung 8 sowie einer Luftaustrittsöffnung 9 versehen, wobei die Einlassöffnung 8 im Bereich einer Seitenwand des Kunststoffbeutels 2 und die Luftaustrittsöffnung 9 im Bereich der entgegengesetzten Seitenwand des Kunststoffbeutels 2 angeordnet ist. Dadurch wird erreicht, dass die in den Kunststoffbeutel 2 eingeblasene Warmluft an den Beutelwandungen entlang und um das aufzutauende Gut 3 herumgeführt wird, so dass das aufzutauende Gut 3 allseitig mit der eingeblasenen Warmluft in Berührung kommt und somit schnell und gleichmässig auftaut.

Aus Fig. 2 geht auch hervor, dass der Kunststoffbeutel 2 durch eine im Seitenbereich des Warmluftgebläses 2 angeordnete Klemmvorrichtung 10 am Ansatz 7 des Gehäuses 6 festklemmbar ist. Die Klemmvorrichtung 10 besteht aus einem schwenkbar am Gehäuse 6 befestigten Klemmhebel 11, der an seinem freien Ende eine Verdickung 12 aufweist, die in eine entsprechende Aussparung 13 des Gehäuses 6 einschwenkbar ist.

Wie aus Fig. 2 weiterhin sehr deutlich hervorgeht, ist das Gehäuse 6 im Bereich der Einblasöffnung 8 mit einer Luftansaugöffnung 14 versehen, die zweckmässigerweise mit einem Filter 15 ausgestattet ist. Das Filter 15 ist auswechselbar und gewährleistet, dass nur saubere Luft ins Innere des Kunststoffbeutels 2 eingeblasen wird.

Im Bereich der Luftaustrittsöffnung 9 ist das Gehäuse 6 mit einer Abluftöffnung 16 ausgestattet, die durch einen siebartigen Schieber 17 mehr oder weniger verschliessbar ist. Das Gehäuse 6 ist so beschaffen, dass zwischen der Einblasöffnung 8 und der Luftaustrittsöffnung 9 im Inneren ein Verbindungskanal 18 besteht, so dass also die ins Innere des Kunststoffbeutels 2 geblasene Warmluft in Abhängigkeit von der Stellung des Schiebers 17 nach dem Durchlauf durch den Kunststoffbeutel 2 erneut in diesen eingeblasen wird. Diese Methode hat den Vorteil, dass nicht ständig Frischluft angesaugt und erwärmt werden muss, womit eine erhebliche Energieeinsparung einhergeht.

Das Gehäuse 6 ist an seiner dem Kunststoffbeutel 2 zugewandten Vorderseite mit zwei Bohrungen 19 versehen, in die jeweils ein Verbindungsstift 20 eines Auflagerostes 21 einsteckbar sind. Dieser Auflagerost 21 kann zur Aufnahme des aufzutauenden Gutes 3 benutzt werden.

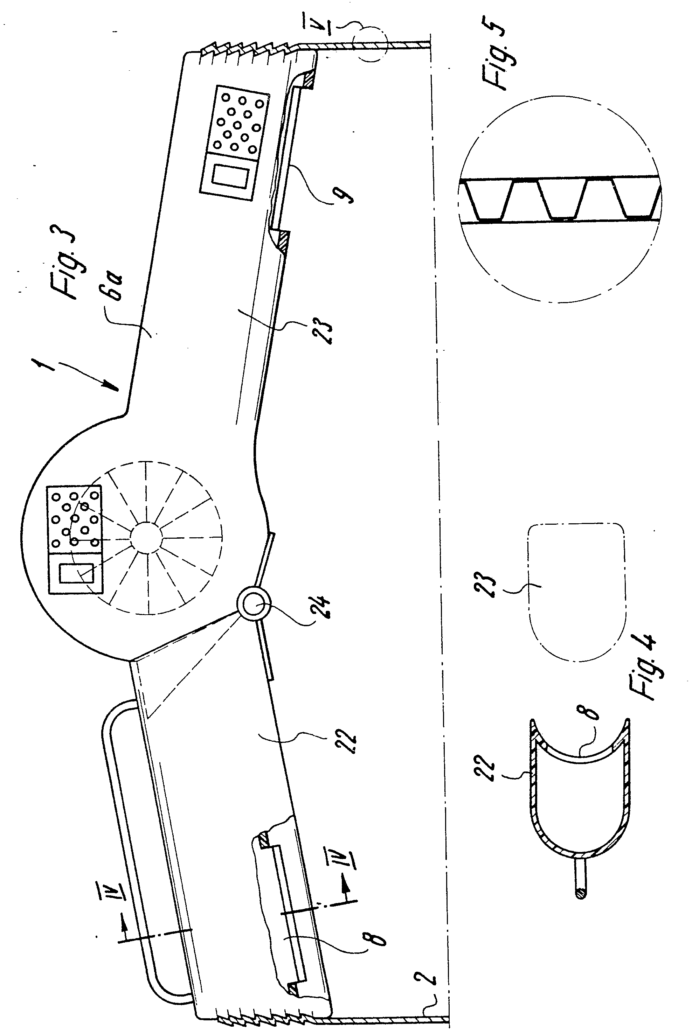

In den Fig. 3 und 4 ist ein weiteres Ausführungsbeispiel der Erfindung dargestellt. In diesem Ausführungsbeispiel ist das Gehäuse 6a aus zwei Teilen 22 und 23 gebildet, die um ein Gelenk 24 schwenkbar miteinander verbunden sind. Das Teil 22 ist mit der Einblasöffnung 8 und das Teil 23 mit der Luftaustrittöffnung 9 versehen. Das Teil 22 kann an das Teil 23 um das Gelenk 24 herangeklappt werden, so dass der Raumbedarf bei Nichtgebrauch sehr gering ist.

In der in Fig. 3 dargestellten Gebrauchslage sind die beiden Teile 22 und 23 voneinander abgeklappt und spannen somit den Kunststoffbeutel 21 im Bereich der Stirnseiten des Gehäuses 6a. Eine zusätzliche Klemmvorrichtung wie bei dem Ausführungsbeispiel nach Fig. 1 und 2 entfällt in diesem Falle.

Wie aus Fig. 5 hervorgeht, kann der Kunststoffbeutel 2 aus einer sog. Luftpolster-Folie bestehen, so dass die äussere Beutelwand gegenüber der inneren Beutelwand thermisch isoliert ist. Die Verwendung einer derartigen Luftpolster-Folie bietet die Möglichkeit, unter gewissen Umständen innerhalb des Kunststoffbeutels 2 nicht nur Tiefkühlkost aufzutauen, sondern auch zu garen. Dabei besteht keine Verletzungsgefahr durch Berühren der Beutelaussenwand, da diese nur mässig erwärmt wird.

## Patentansprüche

1. Vorrichtung zum Auftauen von Tiefkühlkost, bestehend aus einem ein Warmluftgebläse (1) aufnehmenden Gehäuse (6, 6a) mit einer darin angeordneten Heizung (4) und einem Lüfterrad (5) und aus einem das aufzutauende Gut (3) aufnehmenden Behälter, der an dem Gehäuse (6, 6a) lösbar befestigt ist, wobei das Warmluftgebläse (1) auf der dem Behälter zugewandten Seite eine Einblasöffnung (8) sowie eine Luftaustrittsöffnung (9) aufweist, dadurch gekennzeichnet, dass der Behälter aus einem Kunststoffbeutel (2) besteht, dessen offene Kopf-Seite an dem das Warmluftgebläse (1) aufnehmenden Gehäuse (6, 6a) lösbar befestigt ist und dass die Einblasöffnung (8) und die Luftaustrittsöffnung (9) jeweils im Bereich einander gegenüberliegender Seitenwandungen des Kunststoffbeutels (2) angeordnet sind.

2. Vorrichtung nach Anspruch 1, dadurch gekennzeichnet, dass das Gehäuse (6) mit einem Ansatz (7) versehen ist, auf welchen der Kunststoffbeutel (2) aufschiebbar und mittels einer Klemmvorrichtung (10) befestigbar ist.

3. Vorrichtung nach Anspruch 2, dadurch gekennzeichnet, dass die Klemmvorrichtung (10) aus einem am Gehäuse (6) schwenkbar angeordneten Klemmhebel (11) mit einer am freien Ende angeordneten Verdickung (12) besteht, die in eine entsprechende Aussparung (13) des Gehäuses (6) einschwenkbar ist.

4. Vorrichtung nach einem der vorhergehenden Ansprüche, dadurch gekennzeichnet, dass das Innere des Gehäuses (6) einen Verbindungskanal (18) aufweist, durch den die Einblasöffnung (8) und die Luftaustrittsöffnung (9) untereinander verbunden sind.

5. Vorrichtung nach einem der vorhergehenden Ansprüche, dadurch gekennzeichnet, das eine im Bereich der Einblasöffnung (8) angeordnete Luftansaugöffnung (14) durch ein auswechselbares Filter (15) geschützt ist.

6. Vorrichtung nach einem der vorhergehenden Ansprüche, dadurch gekennzeichnet, dass im Bereich der Luftaustrittsöffnung (9) eine Abluftöffnung (16) vorgesehen ist, die mittels eines siebartigen Schiebers (17) verschliessbar ist.

7. Vorrichtung nach einem der vorhergehenden Ansprüche, dadurch gekennzeichnet, dass das Gehäuse (6) an seiner dem Kunststoffbeutel (2) zugewandten Vorderseite mit Bohrungen (19) zur Aufnahme von Verbindungsstiften (20) eines Auflagerostes (21) versehen ist.

8. Vorrichtung nach Anspruch 1, dadurch gekennzeichnet, dass das Gehäuse (6a) aus zwei um ein Gelenk (24) gegeneinander verschwenkbaren Teilen (22 und 23) besteht, an deren Stirnseiten der Kunststoffbeutel (2) festklemmbar ist.

9. Vorrichtung nach einem der vorhergehenden Ansprüche, dadurch gekennzeichnet, dass der Kunststoffbeutel (2) aus einer Luftpolster-Folie besteht.

**Revendications**

1. Dispositif pour la décongélation d'aliments surgelés, constitué par un carter logeant une soufflerie d'air chaud comprenant un corps chauffant et une roue à pales, et par un récipient pour les produits à décongeler, fixé sur le carter de façon séparable, la soufflerie d'air chaud présentant sur son côté tourné vers le récipient un orifice de soufflage ainsi qu'un orifice de sortie de l'air, caractérisé en ce que le récipient est constitué par un sac de matière plastique (2), dont le côté entrée est fixé de façon amovible sur le carter de la soufflerie d'air chaud (1) et en ce que l'orifice de soufflage (8) et celui de sortie de l'air (9) sont situés chacun dans la zone de l'une respective de deux parois opposées du sac de matière plastique (2).

2. Dispositif selon la revendication 1, caractérisé en ce que le carter (6) est muni d'un prolongement (7) sur lequel le sac de matière plastique (2) peut être enfilé et immobilisé au moyen d'un dispositif de serrage (10).

3. Dispositif selon la revendication 2, caractérisé en ce que le dispositif de serrage (10) est constitué par un levier de serrage (11) monté à pivotement sur le carter (6) et présentant à son extrémité libre un renflement (12) apte à s'engager, par pivotement du levier, dans un évidement correspondant (13) du carter (6).

4. Dispositif selon l'une quelconque des revendications précédentes, caractérisé en ce que l'intérieur du carter (6) comporte un canal de communication (18), par lequel l'orifice de soufflage (8) et l'orifice de sortie de l'air (9) sont reliés l'un à l'autre.

5. Dispositif selon l'une quelconque des revendications précédentes, caractérisé en ce qu'un orifice d'aspiration de l'air (14) situé dans la zone de l'orifice de soufflage (8) est protégé par un filtre interchangeable (15).

6. Dispositif selon l'une quelconque des revendications précédentes, caractérisé en ce qu'il est prévu dans la zone de l'orifice de sortie de l'air (9) un orifice d'échappement d'air (16) obturable par un volet coulissant (17) de type perforé.

7. Dispositif selon l'une quelconque des revendications précédentes, caractérisé en ce que le carter (16) présente sur son côté avant, tourné vers le sac de matière plastique (2) des trous (19) pour recevoir des broches de fixation (20) d'une grille d'appui (21).

8. Dispositif selon la revendication 1, caractérisé en ce que le carter (6a) est formé de deux parties (22 et 23) pivotant l'une relativement à l'autre autour d'une articulation (24), sur les faces en bout respectives desquelles le sac de matière plastique (2) est fixé par serrage.

9. Dispositif selon l'une quelconque des revendications précédentes, caractérisé en ce que le sac de matière plastique (2) est fait d'un film à coussin d'air.

**Claims**

1. Apparatus for thawing frozen food, comprising a housing which accommodates a hot air blower, with a heating means arranged in the housing and a fan wheel, and a container for receiving the food to be thawed, the container being releasably secured to the housing, wherein, on the side which is towards the container, the hot air blower has an air injection opening and an air outlet opening, characterised in that the container comprises a plastics bag (2) whose open head end is releasably secured to the housing which accommodates the hot air blower (1), and that the air injection opening (8) and the air outlet opening (9) are each arranged in the region of respective oppositely disposed side walls of the plastics bag (2).

2. Apparatus according to claim 1 characterised in that the housing (6) is provided with a connecting projection (7) on to which the plastics bag (2) can be pushed and secured by means of a clamp device (10).

3. Apparatus according to claim 2 characterised in that the clamp device (10) comprises a clamp lever (11) which is disposed pivotally on the housing (6) and which has an increased-thickness portion (12) at its free end, which increased-thickness portion (12) can be pivoted into a corresponding recess (13) in the housing (6).

4. Apparatus according to one of the preceding claims characterised in that the interior of the housing (6) has a connecting passage (18) which interconnects the air injection opening (8) and the air outlet opening (9).

5. Apparatus according to one of the preceding claims characterised in that an air suction opening (14) which is arranged in the region of the air injection opening (8) is protected by a replaceable filter (15).

6. Apparatus according to one of the preceding claims characterised in that an air exhaust opening (16) is provided in the region of the air outlet opening (9) and can be closed by means of a sieve-type slider (17).

7. Apparatus according to one of the preceding claims characterised in that, at its front side which is towards the plastics bag (2), the housing (6) is provided with bores (19) for receiving connecting pins (20) of a support grid (21).

8. Apparatus according to claim 1 characterised in that the housing (6a) comprises two portions (22 and 23) which are pivotal relative to each other about a hinge means (24), to the end faces of which portions (22 and 23) the plastics bag (2) can be clamped fast.

9. Apparatus according to one of the preceding claims characterised in that the plastics bag (2) comprises an air-cushion film.

Fig. 1

Fig.2

Fig. 3

Fig. 4

Fig. 5